# EUROPEAN PATENT APPLICATION

(11) **EP 3 095 761 A1**
(43) Date of publication of application: **23.11.2016**
(21) Application number: 15752206.1
(22) Date of filing: 18.02.2015
(51) Int. Cl.: C01G 23/00, B01J 20/06, B01J 20/30, G21F 9/12

(54) **METHOD FOR PRODUCING NONATITANATE OF ALKALI METAL**

(30) Priority: 21.02.2014 JP 2014032351
(71) Applicant: Nippon Chemical Industrial Co., Ltd., Tokyo 136-8515 (JP)
(72) Inventor: MIYABE Shinsuke, Tokyo 136-8515 (JP); KINOSE Yutaka, Tokyo 136-8515 (JP); KOZASU Kenta, Tokyo 136-8515 (JP)
(74) Representative: Evans, Marc Nigel
(86) International application number: PCT/JP2015/054391
(87) International publication number: WO 2015/125809

(57) **Abstract**

A method for producing a nonatitanate of an alkali metal, the method having: a first step for reacting an alkali metal hydroxide with titanium tetrachloride and producing Ti(OH)₄; a second step for mixing the resulting Ti(OH)₄ and an alkali metal hydroxide; and a third step for heating the mixture obtained in the second step, the alkali metal hydroxide being used so that the A/Ti molar ratio (A represents an alkali metal element) falls within a range of 1.0-5.0 in the second step, wherein a nonatitanate of an alkali metal can be produced economically.

## Description

### Technical Field

The present invention relates to a method for producing a nonatitanate of an alkali metal. The nonatitanate obtained by the production method of the present invention is particularly suitably used as an adsorbent which can separate and recover strontium dissolved in water selectively and efficiently.

### Background Art

Conventionally, coprecipitation treatment has been known as a treatment technique of wastewater containing radiostrontium (refer to the following Patent Literature 1). However, the coprecipitation treatment is not effective for water-soluble radiostrontium, and, at present, the water-soluble radiostrontium is removed by adsorption with an inorganic adsorbent such as zeolite (refer to the following Patent Literature 2). However, a problem is known that when radiostrontium flows out into sea water, an increase in the concentration of calcium and magnesium in sea water components acts in the direction of suppressing the ion exchange reaction between strontium and an adsorbent. Therefore, a titanate, crystalline titania hydrate fibers, and the like are generally used as a strontium adsorbent (refer to the following Non Patent Literature 1).

Potassium dititanate and potassium tetratitanate are known as a titanate for removing strontium (refer to the following Patent Literature 3). Further, amorphous titanic acid is also known (refer to the following Patent Literature 4).

Incidentally, the following two methods are described in Non Patent Literature 2 as a method for producing sodium nonatitanate which is one of titanates.
(1) Titanium isopropoxide (diluted with methanol) and 10% NaOH solution in methanol are mixed to produce a methanol-soluble intermediate, which is then allowed to stand in the air to perform methanol evaporation and hydrolysis to produce sodium titanium gel. The gel is air-dried and subjected to hydrothermal treatment over 20 hours at 160°C or more and 320°C or less.
(2) Anatase-type titanium oxide hydrate (intermediate TiO(OH)₂ of titanium dioxide by sulfuric acid method) is slurried with 10 M NaOH, and the slurry is subjected to hydrothermal treatment over 20 hours at 200°C or more and 300°C or less.

### Citation List

### Patent Literature

Patent Literature 1: Japanese Patent Laid-Open No. 62-266499
Patent Literature 2: Japanese Patent Laid-Open No. 2013-57599
Patent Literature 3: Japanese Patent Application No. 2012-122214
Patent Literature 4: Japanese Patent Laid-Open No. 2013-78725

Non Patent Literature 1: JAEA-Research 2011-037
Non Patent Literature 2: Journal of Solid State Chemistry 73, 98-106 (1988)

### Summary of Invention

### Technical Problem

However, in the conventional production methods described above, expensive materials are used as a starting material of a titanium source, and severe reaction conditions are employed. Therefore, these methods are not suitable for the industrial production method. Therefore, an object of the present invention is the improvement of the method for producing a nonatitanate.

### Solution to Problem

As a result of extensive and intensive studies to achieve the above object, the present inventor has found that the above object can be achieved by using titanium tetrachloride as a starting material of a nonatitanate.

The present invention has been made based on the above finding, and provides a method for producing a nonatitanate of an alkali metal, the method comprising:
a first step of allowing an alkali metal hydroxide to act on titanium tetrachloride to produce Ti(OH)₄;
a second step of mixing the resulting Ti(OH)₄ and an alkali metal hydroxide; and
a third step of heating the mixed solution obtained in the second step,
wherein, in the second step, the alkali metal hydroxide is used so that an A/Ti molar ratio (A represents an alkali metal element) is in a range of 1.0 to 5.0.

### Advantageous Effects of Invention

In the production method of the present invention, a relatively inexpensive starting material is used, and the reaction condition is relatively mild. Therefore, it is possible to economically produce the resulting target nonatitanate. Further, the resulting nonatitanate can highly selectively remove strontium from a strontium-containing solution in which other alkaline earth metals, such as calcium and magnesium, coexist.

### Brief Description of Drawings

[Figure 1] Figure 1 shows XRD charts of sodium nonatitanate obtained in Examples 1-1 to 1-4.
[Figure 2] Figure 2 shows an XRD chart of sodium titanate used as Comparative Example 1.
[Figure 3] Figure 3 shows XRD charts of sodium nonatitanate obtained in Examples 2-1 to 2-4.
[Figure 4] Figure 4 shows a scanning electron microscope image of sodium nonatitanate particles obtained in Example 2-1.

### Description of Embodiments

A nonatitanate of an alkali metal (hereinafter also simply referred to as a "nonatitanate") obtained in the production method of the present invention is represented by A₄Ti₉O₂₀·nH₂O. In the formula, A represents at least one alkali metal (hereinafter "A" is used with this meaning); and n represents a number of zero or more. Note that when "nonatitanate" is used in the following description, it includes not only an anhydrous salt but also a hydrate salt. The nonatitanate is produced by the method comprising the following steps.
A first step: allowing an alkali metal hydroxide to act on titanium tetrachloride to produce Ti(OH)₄.
A second step: mixing the resulting Ti(OH)₄ and an alkali metal hydroxide.
A third step: heating the mixed solution obtained in the second step.

Hereinafter, each step will be described.

In the first step in the production method of the present invention, an alkali metal hydroxide is allowed to act on titanium tetrachloride to produce Ti(OH)₄. For example, titanium tetrachloride is used in the state of an aqueous solution, and this aqueous solution and an aqueous solution of an alkali metal hydroxide are mixed. Both the aqueous solutions are mixed to thereby neutralize titanium tetrachloride to produce Ti(OH)₄.

A commercially-available industrial grade product can be used as it is as the titanium tetrachloride aqueous solution. For example, titanium tetrachloride TC-36 (TiO₂; 15.3% by mass, HCl; 28.3% by mass) manufactured by Ishihara Sangyo Kaisha, Ltd. can be used as it is without dilution. On the other hand, at least one aqueous solution selected, for example, from sodium hydroxide and potassium hydroxide can be used as the aqueous solution of an alkali metal hydroxide. When sodium hydroxide, for example, is used as an alkali metal hydroxide, commercially-available 25% by mass liquid caustic soda can be used as it is.

The mixing method of the titanium tetrachloride aqueous solution and the aqueous solution of an alkali metal hydroxide is not particularly limited.

For example, the aqueous solution of an alkali metal hydroxide may be added all at once or little by little to the titanium tetrachloride aqueous solution. Conversely, the titanium tetrachloride aqueous solution may be added all at once or little by little to the aqueous solution of an alkali metal hydroxide. Further, the titanium tetrachloride aqueous solution and the aqueous solution of an alkali metal hydroxide may also be added all at once or little by little at the same time.

When the mixing of the titanium tetrachloride aqueous solution and the alkali metal hydroxide is performed by consecutive addition, there will be a point where the viscosity of the liquid suddenly increases during mixing. Therefore, it is preferred to add the components over several minutes to about 1 hour. The mixing of both the components may generally be performed at room temperature or in a non-heated state. However, mixing in a heated state is not prohibited.

The mixing of the titanium tetrachloride aqueous solution and the aqueous solution of an alkali metal hydroxide is performed so that the pH of the mixed solution is preferably 5.0 or more and 9.0 or less, more preferably 6.5 or more and 8.0 or less. Further, the mixing of both the aqueous solutions is performed so that the concentration of titanium in the mixed solution is preferably 0.02 g/g or more and 0.04 g/g or less, more preferably 0.03 g/g or more and 0.04 g/g or less. Further, the mixing is performed so that a molar ratio A/Ti of the sum total of alkali metals to titanium is preferably 4.15 or more and 4.40 or less, more preferably 4.25 or more and 4.30 or less.

Further, in the first step, the concentration of titanium in the mixed solution is preferably 2% by mass or more and 4% by mass or less. A concentration of titanium of 2% by mass or more can effectively prevent the solution from changing to a paste when an alkali metal hydroxide is added in the second step to be described below. Further, a concentration of titanium of 4% by mass or less can effectively prevent a hard mass to be unintendedly produced in the third step to be described below.

The first step is performed until unreacted titanium tetrachloride is not present in the mixed solution. The production of Ti(OH)₄ which is a water-insoluble compound of titanium in the solution by the mixing of a titanium tetrachloride aqueous solution and an aqueous solution of an alkali metal hydroxide can be identified, for example, by the production of a white precipitate when the titanium tetrachloride aqueous solution and the alkali metal hydroxide are mixed. Further, the fact that unreacted titanium tetrachloride is not present in the mixed solution can be identified, for example, by measuring the pH of a mixed slurry. Specifically, since the lower limit of pH at which Ti(OH)₄ is produced is about 2.0, the presence or absence of the unreacted titanium tetrachloride in the mixed solution can be determined by using the pH value as an index. Since it is known that the solubility product Kₛₚ of Ti(OH)₄ is an extremely small value of 8 × 10⁻⁵⁴ (25°C), it can be said that the unreacted titanium tetrachloride is not present in the solution at the above pH value as a boundary.

In the first step, after the completion of the mixing of the titanium tetrachloride aqueous solution and the aqueous solution of an alkali metal hydroxide, the mixed solution may be aged by continuing the stirring of the mixed solution. Although the aging time depends on the volume of the solution, it is preferred that the aging is generally performed over 15 minutes or more and 120 minutes or less, particularly over 30 minutes or more and 60 minutes or less. The aging may be performed in a non-heated state at room temperature. However, the aging in a heated state is not prohibited. The aging may be performed, for example, in a state of allowing the solution to stand still, or may be performed in a stirred state using a line mixer or the like.

When the first step is completed as described above, the second step will be performed next. In the second step, the solution containing Ti(OH)₄ is mixed, for example, with an aqueous solution of an alkali metal hydroxide. The alkali metal hydroxide used in this step may be the same as or different from the alkali metal hydroxide used in the first step. The alkali metal hydroxide used in the second step is preferably the same one as the alkali metal hydroxide used in the first step from the point that the production process is not complicated.

A method of mixing the solution containing Ti(OH)₄ with the aqueous solution of an alkali metal hydroxide is not particularly limited. For example, the aqueous solution of an alkali metal hydroxide may be added all at once or little by little to the solution containing Ti(OH)₄. Conversely, the solution containing Ti(OH)₄ may be added all at once or little by little to the aqueous solution of an alkali metal hydroxide. Further, the solution containing Ti(OH)₄ and the aqueous solution of an alkali metal hydroxide may be added all at once or little by little at the same time.

In the second step, the amount of the alkali metal hydroxide added relative to Ti(OH)₄ is important. More particularly, the alkali metal hydroxide is added so that the molar ratio A/Ti of the alkali metal hydroxide to Ti(OH)₄ is in a range of 1.0 or more and 5.0 or less. If the molar ratio A/Ti is less than 1.0, it will be difficult to obtain a target nonatitanate. On the other hand, if the molar ratio A/Ti is more than 5.0, a titanate other than the nonatitanate will be easily produced as a by-product. From these points of view, the molar ratio A/Ti is preferably 1.0 or more and 5.0 or less, more preferably 1.0 or more and 3.0 or less.

In the second step, one or more of alkali metal hydroxides may be used. For example, at least one selected from sodium hydroxide and potassium hydroxide may be used as the alkali metal hydroxide. When two or more alkali metal hydroxides are used, the value of A in the above molar ratio A/Ti is the sum of all the alkali metals. When two or more alkali metal hydroxides are used, the resulting nonatitanate is a mixture of a nonatitanate of each alkali metal and/or a solid solution of a nonatitanate containing each alkali metal.

According to the present production method, when sodium hydroxide and/or potassium hydroxide is used as an alkali metal hydroxide, it is possible to obtain at least one nonatitanate selected from the group consisting of Na₄Ti₉O₂₀·nH₂O, K₄Ti₉O₂₀·nH₂O, and (Na₁₋ₓKₓ) ₄Ti₉O₂₀·nH₂O where x represents a number of more than 0 and less than 1, and n represents a number of 0 or more).

In the second step, the aging may be performed in a non-heated state at room temperature. However, aging in a heated state is not prohibited. In the second step, when the mixing of the solution containing Ti(OH)₄ and the aqueous solution of an alkali metal hydroxide is completed, it is preferred to subject the mixed solution to the aging step before performing the third step. The aging may be performed, for example, in a temperature range of 30°C or more and 100°C or less over 0.5 hour or more and 2 hours or less. A much more uniform product can be obtained by the aging. The aging may be performed, for example, in a state of allowing the solution to stand still, or may be performed in a stirred state using a line mixer or the like.

Next, the third step is performed. In the third step, the mixed solution obtained in the second step is heated. Heating means applying heat from the outside to the reaction system. Therefore, even if the temperature of the reaction system is increased with the heat generated by the reaction, such a case does not correspond to the heating.

The heating in the third step may be performed, for example under spontaneous pressure, in a temperature range of preferably 100°C or more and 300°C or less, more preferably 120°C or more and 200°C or less, further preferably 140°C or more and 170°C or less. The heating under these conditions is performed by using a pressure-resistant sealed vessel such as an autoclave and bringing the reaction system into a sealed state. At the above heating temperature, the heating time may be preferably 6 hours or more and 72 hours or less, more preferably 12 hours or more and 48 hours or less. The heating time may be selected depending on the scale of a device to be used.

Another heating condition in the third step includes a condition of performing the heating, for example under atmospheric pressure, in a temperature range of preferably less than 105°C, more preferably 100°C or less, further preferably 95°C or less, depending on the saturated vapor pressure of the mixed solution. The heating under the condition may be performed by bringing the reaction system into an open state while cooling with a condenser. The lower limit of the heating temperature is preferably 60°C or more, more preferably 70°C or more, further preferably 80°C or more, from the point of view of successfully obtaining a target nonatitanate. At the above heating temperature, the reaction is performed for a heating time of 24 hours or more and 168 hours or less, more preferably 24 hours or more and 72 hours or less. The reaction time may be selected depending on the scale of a synthesizer unit.

In the third step, an alkali metal chloride, for example, sodium chloride or potassium chloride, which is by-produced due to the neutralization performed in the first step, is present in the reaction system. This is one of the features of the production method of the present invention. As a result of investigation by the present inventor, it has been found that when an alkali metal chloride is present in the reaction system in the third step, the alkali metal chloride effectively acts as a mineralizer and contributes to the crystallization of a nonatitanate. According to the production method of the present invention, this allows a target nonatitanate to be obtained in a milder condition, for example, in a lower temperature region, compared with conventionally known methods for producing a nonatitanate.

After a target nonatitanate is obtained in this way, the reaction system is cooled, and then the resulting product is subjected to solid-liquid separation. The resulting solid is subjected to repulping washing and then dried to remove attached water. The nonatitanate obtained in this way is composed of an amorphous granular material.

According to the production method of the present invention, a target nonatitanate can be obtained using titanium tetrachloride which is a relatively inexpensive starting material, as described above. Further, a target nonatitanate can be obtained even when the heating temperature during the production is set to a lower temperature than before. Thus, the production method of the present invention is extremely suitable for industrially producing a nonatitanate.

When sodium nonatitanate and potassium nonatitanate and a solid solution of sodium nonatitanate and potassium nonatitanate in the nonatitanates obtained by the production method of the present invention are subjected to X-ray diffraction measurement using Cu-Kα as an X-ray source in a range where the angle of diffraction (2θ) is from 5 degrees to 80 degrees, one or more peaks of these compounds will be observed. Particularly, when these compounds are subjected to X-ray diffraction measurement using the ray source and in the range of the angle of diffraction described above, the main peaks are preferably observed at an angle of diffraction (2θ) = 10 degrees or less. The peaks detected at 10 degrees or less are derived from the compounds in which the crystal orientation is (010) and n in the general formula A₄Ti₉O₂₀·nH₂O is 5 or more and 7 or less. When the main peaks are detected at an angle of diffraction (2θ) = 10 degrees or less, further peaks are preferably detected in a range of an angle of diffraction (2θ) = 27 degrees or more and 29 degrees or less and/or 47 degrees or more and 49 degrees or less, in addition to the main peaks. Further, these peaks each preferably have a height that is 10% or more and 70% or less of the height of the main peaks described above.

The nonatitanate obtained by the production method of the present invention is excellent in the properties of removing strontium dissolved in water by adsorption. Particularly, it is excellent in the properties of removing strontium by adsorption from the water in which other alkaline earth metals, such as calcium and magnesium, coexist and dissolved at high concentration together with strontium. The nonatitanate obtained by the production method of the present invention has an adsorption ability also for cesium dissolved in water. This nonatitanate can be suitably used as an adsorbent for cesium and/or strontium, particularly as an adsorbent for strontium, utilizing these properties.

The nonatitanate obtained by the production method of the present invention may be processed into a powdered form or a granular form or may also be formed into a shaped article having the shape of a sphere, cylinder, or the like, by a forming technique such as extrusion. Particularly, the nonatitanate preferably has a powdered form or a granular form. The nonatitanate in these various forms can be used as the adsorbent for cesium and/or strontium, particularly the adsorbent for strontium, as described above. This adsorbent has one of the features in that it is composed of particles that contain a nonatitanate of an alkali metal and have the shape of an irregular crushed stone having one or more ridges (also referred to as a "crushed form"). The powder which is an aggregate of particles may be used as it is or may be formed into a predetermined shape for use. The particles of a nonatitanate of an alkali metal known until now, for example, the particles of sodium nonatitanate, are needlelike particles as described in Non Patent Literature 2. The size of the particles in the present invention is preferably 5 µm or more and 75 µm or less, more preferably 10 µm or more and 60 µm or less, when the size is represented by the volume cumulative particle size D₅₀ at a cumulative volume of 50% by volume obtained by a laser diffraction and scattering particle size distribution measuring method.

Examples of forming described above include granulation for forming a powdered nonatitanate or a powdered adsorbent containing the same into a granular shape, a method of forming a slurry of a powdered nonatitanate and dropwise adding the slurry to a solution containing a curing agent, and a method of attaching and applying a powder of a nonatitanate to the surface of a resin core. The method of granulation includes known techniques. Examples thereof include mixing agitation granulation, rolling granulation, extrusion granulation, crushing granulation, fluid bed granulation, spray drying granulation (spray dry), and compression granulation. A binder and a solvent may be added and mixed as necessary in the process of granulation. Examples of the binder that can be used include a known binder such as polyvinyl alcohol, polyethylene oxide, and hydroxyethylcellulose. Examples of the solvent that can be used include various solvents such as an aqueous solvent and an organic solvent. The particles obtained by granulation processing preferably has a particle size of 300 µm or more and 600 µm or less. The use of the granulated particles having a particle size of this range has an advantage that, for example, when an adsorption tower is filled with the particles, the clogging hardly occurs.

### Examples

Hereinafter, the present invention will be described in more detail with reference to Examples. However, the scope of the present invention is not limited to these Examples. Unless otherwise specified, "%" means "% by mass". The evaluation devices and materials used in Examples and Comparative Examples are as follows.

### <Evaluation Devices>

X-ray diffraction: D8 Advance S manufactured by Bruker Corp. was used. Cu-Kα was used as a ray source. The measurement conditions were set to a tube voltage of 40 kV, a tube current of 40 mA, and a scanning rate of 0.1°/sec.
ICP-AES: 720-ES manufactured by Varian, Inc. was used. The concentrations of Cs and Sr were measured by setting the measuring wavelength of Cs at 697.327 nm and the measuring wavelength of Sr at 216.596 nm. As standard samples, there were used aqueous solutions containing 0.3% of NaCl which further contains 100 ppm, 50 ppm, and 10 ppm of Cs, and aqueous solutions containing 0.3% of NaCl which further contains 100 ppm, 10 ppm, and 1 ppm of Sr.

### <Materials Used>

- Caustic soda aqueous solution: 25% sodium hydroxide for industrial use (NaOH: 25%, H₂O: 75%).
- Titanium tetrachloride aqueous solution: TC-36 manufactured by Ishihara Sangyo Kaisha, Ltd.
- Simulated sea water: 0.3% NaCl aqueous solution containing 100 ppm of Cs and 100 ppm of Sr was used as simulated sea water. The simulated sea water was obtained by mixing 3.0151 g of NaCl (grade: 99.5%), 0.3074 g of SrCl·6H₂O (grade: 99%), 0.1481 g of CsNO₃ (grade: 99%), and 996.5294 g of H₂O.

### [Examples 1-1 to 1-4]

Into a 1-L beaker, was weighed 202 g of a titanium tetrachloride aqueous solution (15.3% in terms of TiO₂, and 28.3% in terms of HCl). The titanium tetrachloride aqueous solution was stirred at room temperature (20°C), and thereto was successively dropwise added 265 g of 25% liquid caustic soda over about 10 minutes to neutralize the titanium tetrachloride aqueous solution. The stirring was continued for 30 minutes after the completion of neutralization (the first step). Subsequently, an additional 25% liquid caustic soda was added thereto at room temperature (20°C) in an amount as shown in Table 1, followed by continuing the stirring over 1 hour (the second step). Next, the mixed solution was put into a pressure vessel and heated in an oven at 170°C (the third step). After heating for 72 hours, the pressure vessel was cooled, and the contents were subjected to filtration/repulping washing. Further, the filtered cake was dried to obtain the target sodium nonatitanate.

**[Table 1]**

| | | Example 1-1 | Example 1-2 | Example 1-3 | Example 1-4 |
|---|---|---|---|---|---|
| First step | Titanium tetrachloride | 202 g | 202 g | 202 g | 202 g |
| | 25% Caustic soda | 265 g | 265 g | 265 g | 265 g |
| Second step | 25% Caustic soda | 62 g | 124 g | 186 g | 310 g |
| | Na/Ti molar ratio | 1/1 | 2/1 | 3/1 | 5/1 |

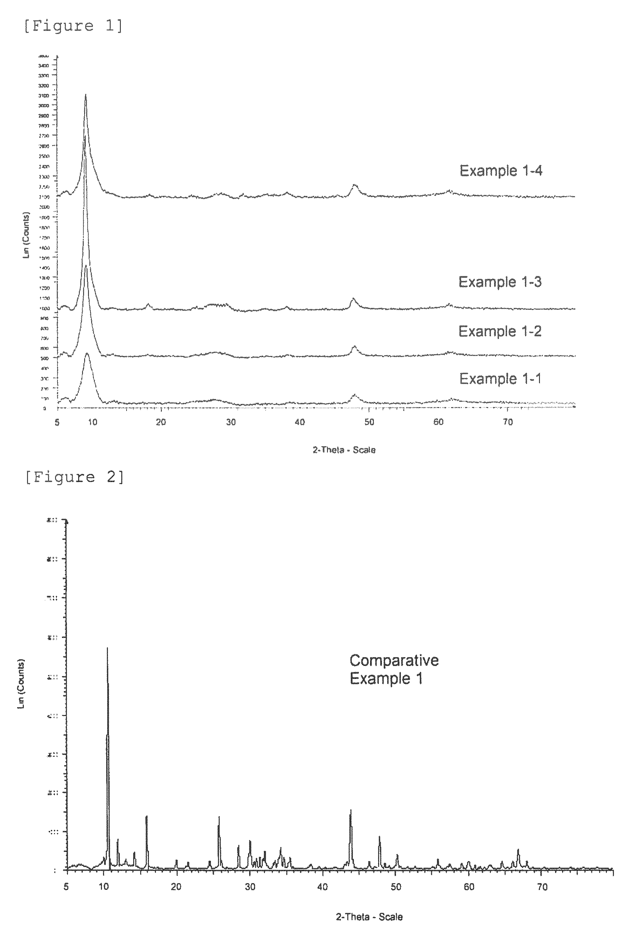

The X-ray diffraction charts of the resulting sodium nonatitanate are shown in Figure 1. As shown in Figure 1, the main peaks of the sodium nonatitanate were detected at 2θ = about 9 degrees. Further, the results of the composition analysis of the resulting sodium nonatitanate are shown in Table 2.

**[Table 2]**

| | Example 1-1 | Example 1-2 | Example 1-3 | Example 1-4 |
|---|---|---|---|---|
| Na₂O (%) | 14.6 | 15.4 | 14.8 | 15.0 |
| TiO₂ (%) | 85.2 | 83.3 | 85.0 | 84.5 |
| Others (%) | 0.2 | 1.3 | 0.2 | 0.5 |
| TiO₂/Na₂O molar ratio | 4.54 | 4.20 | 4.47 | 4.37 |

### [Comparative Example 1]

A commercially available sodium titanate (Sodium metatitanate manufactured by Aldrich Chemical Company) was used as Comparative Example 1. This sodium titanate was subjected to XRD measurement. The results are shown in Figure 2. From the result shown in Figure 2, it was found that this sodium titanate had a compositional formula of Na₂Ti₃O₇.

### [Comparative Example 2]

In Example 1, the reaction was performed by setting the Na/Ti molar ratio in the second step to 0.5 to obtain a product. However, a diffraction peak was not observed in the XRD measurement of the resulting product. This product was found to be an amorphous material, and it was not able to specify the material.

### <Adsorption Test of Cs and Sr>

The sodium nonatitanate obtained in each Example and the sodium titanate of Comparative Example 1 were subjected to the adsorption test of Cs and Sr. The sodium nonatitanate obtained in each Example was dried, crushed, and sieved through a sieve of 200 meshes, and undersize particles were subjected to the adsorption test. The sodium titanate of Comparative Example 1 was crushed and sieved through a sieve of 200 meshes, and undersize particles were subjected to the adsorption test. Into a 100-mL beaker, was put 0.20 g of each of these samples, and thereto was added 100.0 g of simulated sea water. The resulting mixture was stirred with a magnetic stirrer for 1 hour. Subsequently, the mixture was filtered through 5C filter paper, and the filtrate was taken. The filtrate taken was subjected to the elemental analysis by ICP-AES to measure the content of Cs and Sr in the filtrate. The results are shown in Table 3 below.

**[Table 3]**

| | Cs adsorption | | Sr adsorption | |
|---|---|---|---|---|
| | Concentration after adsorption (ppm) | Percent adsorption (%) | Concentration after adsorption (ppm) | Percent adsorption (%) |
| Example 1-1 | 99.5 | 0.5 | 0.55 | 99.5 |
| Example 1-2 | 99.7 | 0.3 | 0.35 | 99.7 |
| Example 1-3 | 99.5 | 0.5 | 0.43 | 99.6 |
| Example 1-4 | 88.0 | 12.0 | 0.10 | 99.9 |
| Comparative Example 1 | 98.3 | 1.7 | 80.40 | 19.6 |

As apparent from the results shown in Table 3, it is found that the sodium nonatitanate obtained in each Example is excellent in strontium adsorption performance compared with that of the sodium titanate of Comparative Example 1.

### [Examples 2-1 to 2-4]

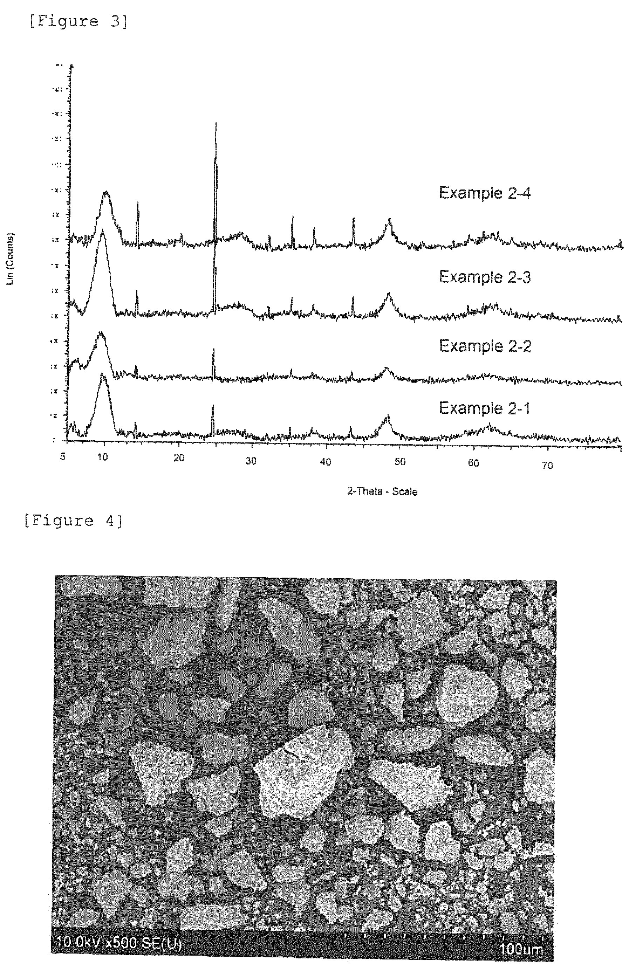

Into a 1-L beaker, was weighed 202 g of a titanium tetrachloride aqueous solution (15.3% in terms of TiO₂, and 28.3% in terms of HCl). The titanium tetrachloride aqueous solution was stirred at room temperature (20°C), and thereto was successively dropwise added 265 g of 25% liquid caustic soda over about 10 minutes to neutralize the titanium tetrachloride aqueous solution. The stirring was continued for 30 minutes after the completion of neutralization (the first step). Subsequently, 165 g of an additional 25% liquid caustic soda was added thereto at room temperature (20°C) (Na/Ti molar ratio; 2.66/1), followed by continuing the stirring over 1 hour (the second step). Next, the mixed solution was put into a 1-L separable flask, and the separable flask was installed in a mantle heater. The separable flask was equipped with a stirrer and a condenser and heated to 100°C under atmospheric pressure. The reaction was continued for one week at 100°C (the third step). During the reaction, samples were taken when 48 hours (Example 2-1), 72 hours (Example 2-2), 96 hours (Example 2-3), and 168 hours (Example 2-4) have elapsed, and the samples were filtered, washed, dried, and crushed (to 200 meshes or less). The XRD diffraction diagram of each sample is shown in Figure 3. Further, the scanning electron microscope image of the particles obtained in Example 2-1 is shown in Figure 4. Further, the results of the adsorption test performed in the same manner as in Example 1-1 and the like are shown in Table 4.

**[Table 4]**

| | Cs adsorption | | Sr adsorotion | |
|---|---|---|---|---|
| | Concentration after adsorption (ppm) | Percent adsorption (%) | Concentration after adsorption (ppm) | Percent adsorption (%) |
| Example 2-1 | 90.9 | 9.1 | 0.18 | 99.8 |
| Example 2-2 | 92.1 | 7.9 | 0.19 | 99.8 |
| Example 2-3 | 92.0 | 8.0 | 1.15 | 98.8 |
| Example 2-4 | 72.8 | 17.2 | 0.26 | 99.7 |

As apparent from the results shown in Table 4, it is found that sodium nonatitanate is obtained by each Example, and the sodium nonatitanate is excellent in the adsorption performance of strontium. Further, it is also found that the adsorption performance of cesium is improved as the heating time in the third step increases. Further, as apparent from the results shown in Figure 4, it was identified that the sodium nonatitanate obtained in Example 2-1 was composed of particles having the shape of an irregular crushed stone having a plurality of ridges. The particles had a size of 44 µm, the size being represented by the volume cumulative particle size D₅₀ at a cumulative volume of 50% by volume obtained by a laser diffraction and scattering particle size distribution measuring method.

## Claims

1. A method for producing a nonatitanate of an alkali metal, the method comprising:
a first step of allowing an alkali metal hydroxide to act on titanium tetrachloride to produce Ti(OH)₄;
a second step of mixing the resulting Ti (OH)₄ and an alkali metal hydroxide; and
a third step of heating the mixed solution obtained in the second step,
wherein, in the second step, the alkali metal hydroxide is used so that an A/Ti molar ratio (A represents an alkali metal element) is in a range of 1.0 to 5.0.

2. The method according to claim 1, wherein the third step is performed in a temperature range of 100°C or more and 300°C or less under spontaneous pressure.

3. The method according to claim 1, wherein the third step is performed in a temperature range of less than 105°C under atmospheric pressure.

4. The method according to any one of claims 1 to 3, wherein at least one selected from sodium hydroxide and potassium hydroxide is used as an alkali metal hydroxide.

5. The method according to any one of claims 1 to 4, wherein there is obtained at least one nonatitanate selected from the group consisting of Na₄Ti₉O₂₀·nH₂O, K₄Ti₉O_{20·}nH₂O, and (Na₁₋ₓKₓ)₄Ti₉O₂₀·nH₂O where x represents a number of more than 0 and less than 1 and n represents a number of 0 or more.

6. An adsorbent for strontium, wherein a nonatitanate of an alkali metal obtained by the production method according to any one of claims 1 to 5 is used.

7. An adsorbent for strontium, wherein the adsorbent is composed of particles that contain a nonatitanate of an alkali metal and have the shape of a crushed stone having one or more ridges.
